# EUROPEAN PATENT SPECIFICATION

(11) **EP 3 520 598 B1**
(45) Date of publication and mention of the grant of the patent: **14.08.2024**
(21) Application number: 17855064.6
(22) Date of filing: 26.09.2017
(51) Int. Cl.: A01D 93/00, A01D 46/00, A01D 51/00

(54) **FRUIT-HARVESTING KIT**
OBSTERNTEKIT
KIT DE RÉCOLTE DE FRUITS

(30) Priority: 28.09.2016 ES 201631169 U
(43) Date of publication of application: 07.08.2019
(73) Proprietor: Agromelca, S.L., 44610 Calaceite (Teruel) (ES)
(72) Inventor: IBAÑEZ DOLZ, David, 44610 Calaceite (ES)
(74) Representative: Schäfer, Matthias W.
(86) International application number: PCT/ES2017/070634
(87) International publication number: WO 2018/060536

(56) References cited:
- EP-A2- 2 168 424
- DE-A1- 2 946 361
- ES-A1- 2 065 213
- ES-A1- 2 390 760
- ES-A2- 2 399 174

## Description

### Object of the invention

The present specification relates to a fruit harvesting kit, adaptable to a vibrator/harvester apparatus, both of front and side operation, basically comprised of a large-capacity container, with suction turbine, positioned in the rear part of the hauling vehicle and connected to the chassis of the vibrator/harvester apparatus through a flexible hose, suctioning the fruit through the same and being stored in said container until its unloading.

The harvester kit optionally includes a set of two short worms and another set of two long worms with adapter support, especially indicated to configure a vibrator/harvester apparatus to collect nuts such as, for example, almonds, replacing the long worms installed in the chassis of the vibrator/harvester apparatus, by the set of short worms, or to collect other fruit, such as, for example, olives, replacing in this case the short worms installed in the chassis of the vibrator/harvester apparatus by the set of long worms with the adapter support. These sets enable adapting the vibrator/harvester apparatus for different applications, if necessary.

The object of the invention is to provide a fruit harvesting kit, which allows the storage of harvested fruit in a large-capacity container, considerably reducing the working times, with the aim of reducing to a maximum the stoppages for unloading; an additional object of the invention is to encourage the harvesting of different types of fruit with a single vibrator/harvester apparatus, through the adaptation of a set of worms, suitable for each case. These sets allow adapting the vibrator/harvester apparatus for different applications, if necessary.

### Background of the invention

At present, several harvesters are known of special use in farms, storing the fruit in the chassis, with the collaboration of a harvester umbrella, with the drawback that the chassis capacity is reduced, forcing it to unload the fruit contained in the chassis with high frequency, which involves many stops, causing a significant loss of time during harvesting of the fruit; an additional device is desirable where the fruit harvested could be accumulated, eliminating or reducing the stops, and thus reducing the working time.

Furthermore, there are harvesting apparatus configured to harvest olives or especially configured for the harvesting of nuts, such as, for example, almonds, with the drawback of having to use a different apparatus for each type of fruit to harvest.

DE 29 46 361 A1 discloses a mobile grass sweeping machine having a movable trailer hitch and slewing arm to support a suction hose.

ES 2 390 760 A1 discloses a self-propelled device for the collection of fruits comprising a vibrating element to cause the fall of the fruit, a receiving element for collecting it and a transport element to transfer the collected fruit to a suitable storage container.

### Description of the invention

With the purpose of reducing the drawbacks cited insofar as is possible, a fruit harvesting kit having the features of claim 1 and a vibrator/harvester apparatus having the features of claim 7 and claim 8 have been devised. The fruit harvesting kit is adaptable to a vibrator/harvester apparatus, both of front and side operation, positioned in the rear part of the same hauling vehicle whereto the vibrator/harvester apparatus remains coupled and a set of two short worms especially indicated for the harvesting of nuts, such as, for example, almonds and also of a set of two long worms, with adaptation support, especially indicated for the harvesting of other fruit such as, for example, olives.

The fruit harvesting kit comprises:
A large-capacity container, which incorporates in its rear side part a tubular connection for the coupling of a flexible hose, which links with the chassis of the vibrator/harvester apparatus, said flexible hose provided for the suction and storage of the harvested fruit inside said container by means of the collaboration of a suction turbine incorporated in the upper part of said container.

The container, in a preferred embodiment, incorporates tipping means and a flap door in its upper part, by means of the actuation of a hydraulic cylinder.

The container is solidly joined by its lower part to a vertical elevator, for its lifting and tipping at the time of the unloading operation of the fruit contained therein.

In an alternative embodiment, the container incorporates in its lower part a flap door, by means of the actuation of a hydraulic cylinder. Likewise, it is solidly joined by its lower part to a vertical elevator, for its lifting, at the time of the unloading operation of the fruit contained therein, without the need to be tipped over.

The suction turbine is actuated by means of a hydraulic motor, in connection with a hydraulic tank and radiators provided for cooling of the circuit.

The flexible hose comprises two metal portions with quick connections at both ends, to allow the simple coupling of the tubular connections of the container and of the chassis of the vibrator/harvester apparatus.

The flexible hose is disconnected from the connection with the container, with the purpose of avoiding interferences of the hose during lifting of the container, likewise, the disconnection of the hose enables reducing its length.

The vertical elevator is solidly joined to a coupling base, equipped with a shaft with two wheels and with quick coupling means with the hauling vehicle.

The vertical elevator incorporates a guide wheel in its upper part to maintain the connection of a block of hoses between the general hydraulic system of the vibrator/harvester apparatus with the hydraulic actuation motor of the turbine, avoiding possible interferences on performing the lifting and tipping operation of the container.

The coupling base bears the weight of the hydraulic components and regulation systems, to maintain the container's centre of gravity.

A vibrator/harvester apparatus is equipped as standard for the harvesting of nuts, or for other fruit, with two side worms, long or short, provided with their actuation motor, a rear worm, common in both configurations and a peeler incorporated on each side, so that with the adaptation of one of the sets of short or long worms, all types of fruit can be harvested as required.

The vibrator/harvester apparatus especially configured to collect nuts, such as, for example, almonds, is equipped with two short worms each one of them in connection with a peeler and a rear worm provided for directing the already peeled fruit towards the container for its storage.

The short worms are positioned by one end in the front part of the chassis and by the opposite end in a structural portion of the chassis together with its actuation motor, this end remaining very close to an opening, manually folding, which connects with each peeler.

The nuts, on falling inside the chassis, in collaboration with the umbrella, displace towards the sides, so that the fruit are dragged towards the peeler, from which, whilst the plant layer that covers the fruit is discarded to the exterior, the nuts with shell is transferred to the rear worm which distributes it towards the flexible hose of suction towards the container.

To use the same vibrator/harvester apparatus for the harvesting of other fruit, such as, for example, olives, it is necessary to replace the short worms, equipped as standard in the chassis, by the set of long worms with the adaptation support.

In this case, the short worms are removed and then an adaptation support is incorporated on both sides to couple thereto an end of the long worm with its actuation motor, being positioned by both sides very close to the rear worm, so that on harvesting olives, they occupy the chassis capacity, but at the same time they are directed through the long worms towards the rear worm which is likewise displaced towards the flexible hose of connection with the container.

On installing the long worms, the folding opening of access to the peelers is closed to avoid losses of fruit, since the peelers are not used in this type of fruit.

In this way, simply by replacing the long worms or short worms, through the sets of worms claimed, all type of fruit can be harvested with the same vibrator/harvester.

The person skilled in the art shall easily understand that he can combine characteristics of different embodiments with characteristics of other possible embodiments, provided that that combination is technically possible.

### Advantages of the invention

The fruit harvesting kit presented provides multiple advantages with its incorporation in vibrator/harvester apparatus, both of front and side operation, making it possible to extend the unloading process, so that it performs a faster harvesting process, generating considerable financial saving.

Another important advantage is that the incorporation, according to requirements, of a set of short or long worms allows the replacement of the worms equipped as standard in the chassis, to allow the harvesting of different fruit, such as, for example, almonds or olives with the same vibrator/harvester apparatus.

### Description of the figures

To better understand the object of the present invention a preferential practical embodiment thereof has been represented in the annex:
Figure - 1 - shows a plan view of a vibrator/harvester apparatus of side operation with the harvester kit incorporated
Figure - 2 - shows a plan view of a vibrator/harvester apparatus of front operation with the harvester kit incorporated
Figures - 3 and 4 - show a side elevational view of the container
Figure - 5 - shows a side elevational view of the container in raised situation
Figure - 6 - shows a side elevational view of the container in unloaded situation
Figures - 7 and 8 - show a side elevational view of the container, in an alternative embodiment
Figures - 9 and 10 - show a side elevational view of the container in situation of elevation and unloading, in an alternative embodiment.
Figures - 11 and 12 - show a chassis incorporating the set of short worms to collect nuts, for example, almond and assembly details
Figures - 13 and 14 - show a chassis incorporating the set of long worms to collect other fruit such as, for example, olives, and assembly details

### Preferred embodiment of the invention

The constitution and characteristics of the invention may be better understood with the following description made with reference to the attached figures.

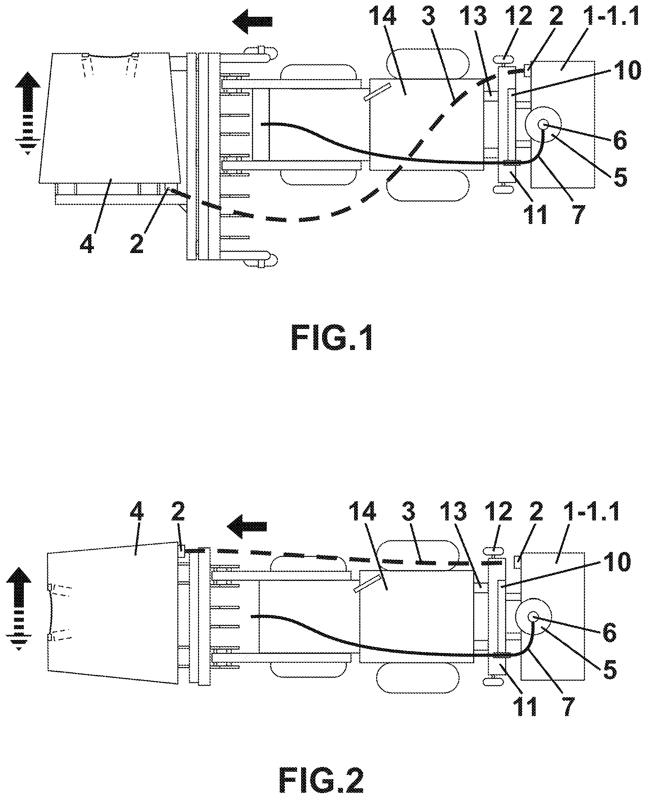

As can be observed, figure 1 illustrates a vibrator/harvester apparatus of side operation and figure 2, a vibrator/harvester apparatus of front operation, incorporating the harvester kit in both, indicating the large-capacity container (1 and 1.1), which incorporates in its rear side part a tubular connection (2) for the coupling of a flexible hose (3), which links with another tubular connection (2) in the chassis (4) of the vibrator/harvester apparatus, said flexible hose (3) provided for the suction and storage of the harvested fruit inside said container (1) by means of the collaboration of a suction turbine (5) actuated by means of a hydraulic motor (6), connected to the general hydraulic system of the vibrator/harvester apparatus through a block of hoses (7).

It also shows a vertical elevator (10), solidly joined to the lower part of the container (1 and 1.1), and in turn to a coupling base (11), equipped with a shaft with two wheels (12) and with quick coupling means (13) with the hauling vehicle (14).

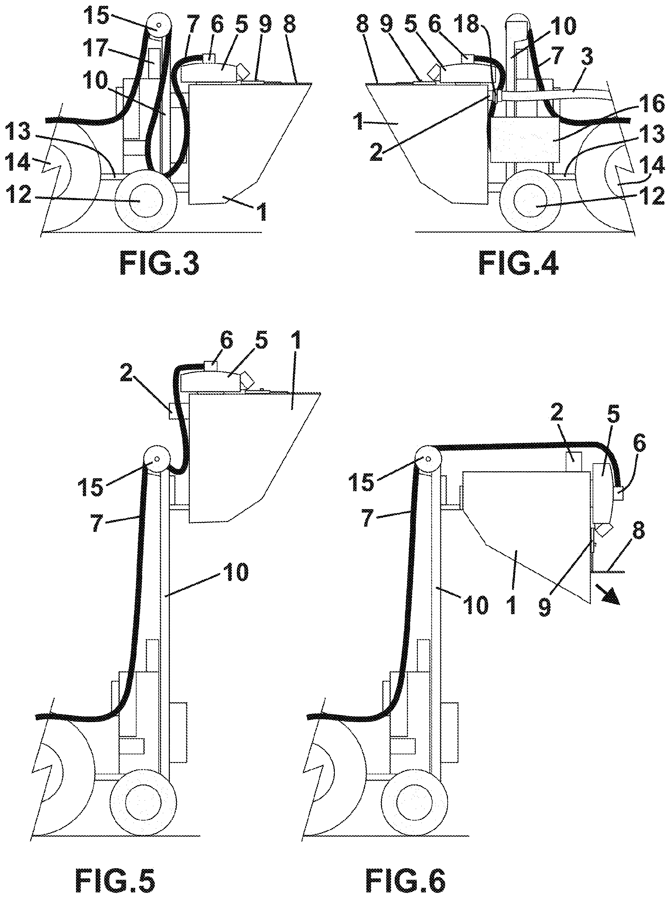

Figures 3 and 4 show a side view of the container (1) indicating, in its upper part, a flap door (8) actuated by a hydraulic cylinder (9) and the turbine (5) actuated by a hydraulic motor (6) in connection with the general hydraulic system through a block of hoses (7), being registered to avoid interferences, in a guide wheel (15), incorporated in the upper part of the vertical elevator (10).

It also indicates a hydraulic tank (16) and cooling radiators (17) of the circuit, positioned on a coupling base (11) with a shaft with wheels (12), coupled with quick coupling means (13) to the hauling vehicle (14).

It also shows the tubular connection (2) for coupling of the flexible hose (3) which incorporates in its ends a quick connection metal portion (18), to allow the simple coupling with the tubular connections (2) of the container (1) and of the chassis (4) of the vibrator/harvester apparatus.

Figure 5 illustrates the vertical elevator (10) lifting the container (1) keeping the block of hoses (7) free of interferences, by means of the collaboration of the guide wheel (15) which it incorporates in its upper part.

It also shows the coupling base (11) bearing the weight of the hydraulic components and regulation systems to maintain the centre of gravity during the lifting and unloading operations, which it illustrates in figure 6, indicating the tipping of the container (1) with the flap door (8) open, by means of the actuation of the hydraulic cylinder (9) unloading the fruit contained in the container (1).

It also shows the disconnection of the hose (3) of the tubular connection (2) of the container (1), with the aim of avoiding interferences during the tipping of said container (1).

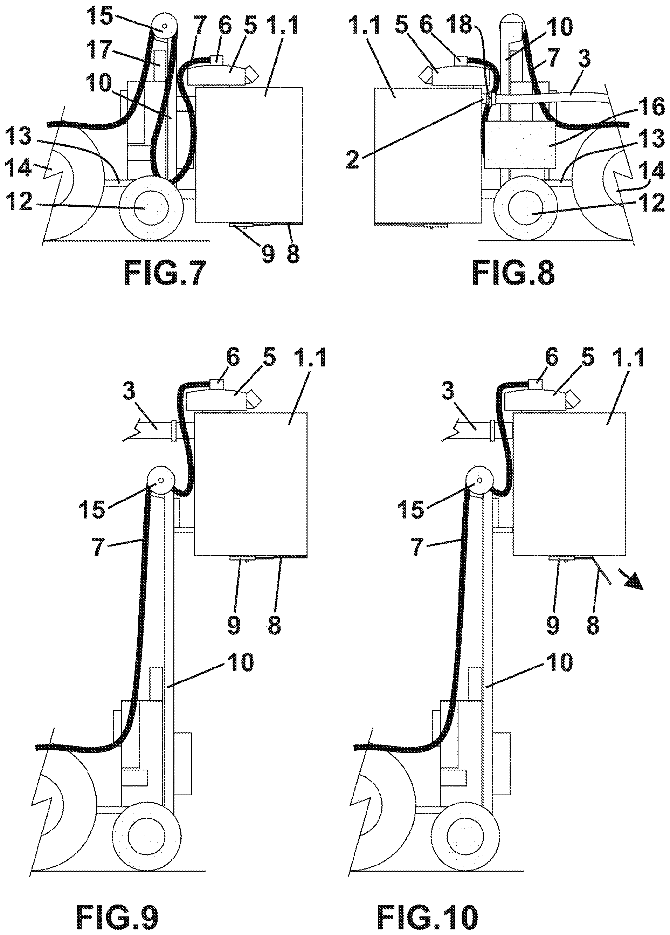

Figures 7 and 8 show a side view of the container (1.1) indicating in its lower part a flap door (8) actuated by a hydraulic cylinder (9) and the turbine (5) actuated by a hydraulic motor (6) in connection with the general hydraulic system through a block of hoses (7), being registered to avoid interferences, in a guide wheel (15), incorporated in the upper part of the vertical elevator (10).

It also indicates a hydraulic tank (16) and cooling radiators (17) of the circuit, positioned on a coupling base (11) with a shaft with wheels (12), coupled with quick coupling means (13) to the hauling vehicle (14).

It also shows the tubular connection (2) for coupling of the flexible hose (3) which incorporates in its ends a quick connection metal portion (18), to allow the simple coupling with the tubular connections (2) of the container (1.1) and of the chassis (4) of the vibrator/harvester apparatus.

Figure 9 illustrates the vertical elevator (10) lifting the container (1.1) keeping the block of hoses (7) free from interferences, by means of the collaboration of the guide wheel (15) which it incorporates in its upper part.

It also shows the coupling base (11) bearing the weight of the hydraulic components and regulation systems to maintain the centre of gravity during the lifting and unloading operations, which it illustrates in figure 10, indicating the tipping of the container (1) with the flap door (8) open, by means of the actuation of the hydraulic cylinder (9) unloading the fruit contained in the container (1.1).

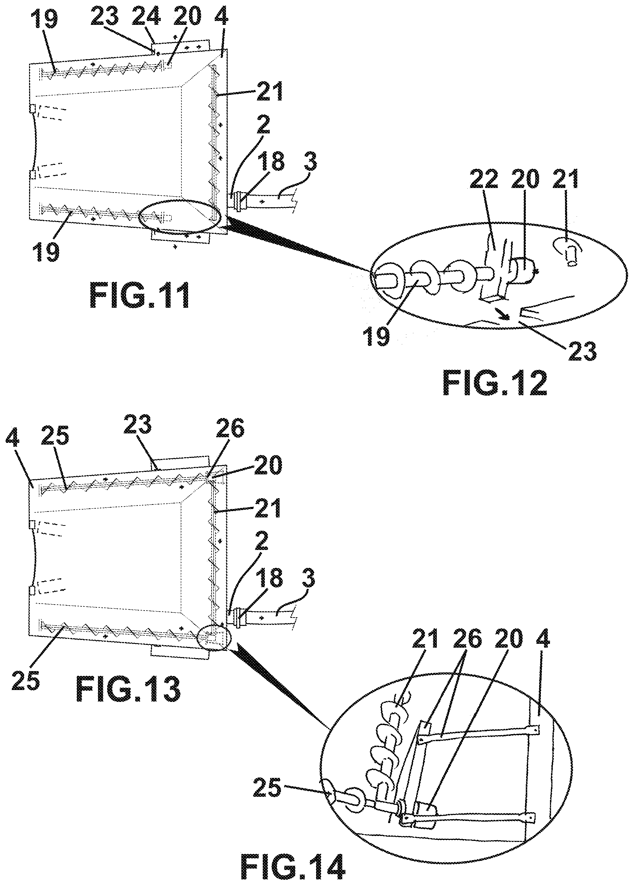

Figure 11 illustrates a chassis (4) of a vibrator/harvester apparatus, incorporating a set of short worms (19), especially indicated for the harvesting of nuts, such as, for example, almonds, replacing the long worms equipped as standard, together with the actuation motors (20), and rear worm (21).

In this case, the set of short worms (19) is installed positioning by one end in the front part of the chassis (4) and by the opposite end in a structural portion (22) of the chassis (4) together with its actuation motor (20), this end remaining very close to an opening (23), manually folding, which connects with each peeler (24), so that with the adaptation of the set of short worms (19), with a same vibrator/harvester apparatus it is possible to harvest another type of fruit, depending on requirements.

It shows the trajectory of the nuts as they fall inside the chassis (4), which in collaboration with the umbrella displaces towards the short worms (19), so that the fruit are dragged towards the peeler (24), from which, whilst the plant layer that covers the fruit is discarded to the exterior, the fruit with shell is transferred to the rear worm (21) which distributes it towards the flexible hose (3) of suction towards the container (1).

Figure 12 illustrates a schematic detail of the coupling of a short worm (19) in the structural portion (22) of the chassis (4) and with its corresponding actuation motor (20), remaining very close to an opening (23), manually folding, which connects with each peeler (24).

Figure 13 illustrates a chassis (4) of a vibrator/harvester apparatus, incorporating a set of long worms (25), especially indicated for the harvesting of other fruit, such as, for example, olives, replacing the short worms equipped as standard, together with the actuation motors (20), and rear worm (21).

In this case, the set of long worms (25), is installed, positioning by one end in the front part of the chassis (4) and by the opposite end coupled to an adaptation support (26) together with its actuation motor (20), the set of long worms (25) being positioned very close to the rear worm (21), and closing the opening (23), of access to the peelers (24), so that with the adaptation of the set of long worms (25), with a same vibrator/harvester apparatus it is possible to harvest another type of fruit, depending on requirements.

It shows the trajectory of olives on falling inside the chassis (4), which in collaboration with the umbrella are displaced towards the long worms (25), so that the fruit are dragged towards the rear worm (21) which distributes it towards the flexible hose (3) of suction towards the container (1).

Figure 14 illustrates a schematic detail of the coupling of a long worm (25) coupled by one end in the adaptation support (26) together with the actuation motor (20), with the worm (21) remaining very to the rear.

All the information referring to examples or embodiments forms part of the description of the invention.

## Claims

1. Fruit harvesting kit adaptable to a vibrator/harvester apparatus having a hauling vehicle (14), a chassis (4) comprising a tubular connection (2), and short or long worms equipped as standard worms in the chassis (4), **characterized by** the fruit harvesting kit comprising
a coupling base (11), equipped with a shaft with two wheels (12) and with quick
coupling means (13) for coupling with a hauling vehicle (14) of the the vibrator/harvester apparatus,
a vertical elevator (10), solidly joined to the coupling base (11),
a large-capacity container (1; 1.1), coupled by its lower part with the vertical elevator (10) for lifting said container (1 and 1.1),
a flexible hose (3),
wherein, said container (1; 1.1) incorporates in its rear side part, a tubular connection (2) for the assembly of the flexible hose (3), for coupling with a tubular connection (2) of the chassis (4) of the vibrator/harvester apparatus, said flexible hose (3) being provided for the suction and storage of the harvested fruit inside said container (1) by means of the collaboration of a suction turbine (5) with hydraulic actuation motor (6) incorporated in the upper part of said container (1).

2. Fruit harvesting kit, according to claim 1, wherein the container (1) incorporates lifting and tipping means and a flap door (8) in its upper part, by means of the actuation of a hydraulic cylinder (9).

3. Fruit harvesting kit, according to claim 1, wherein the container (1.1) incorporates lifting means and a flap door (8) in its lower part, by means of the actuation of a hydraulic cylinder (9).

4. Fruit harvesting kit, according to the preceding claims, **wherein** the vertical elevator (10) incorporates a guide wheel (12) in its upper part for the positioning of a block of hoses (7) connected between a general hydraulic system of the vibrator/harvester apparatus and the hydraulic actuation motor (6) of the suction turbine (5).

5. Fruit harvesting kit, according to the preceding claims, wherein the flexible hose (3) comprises a quick connection metal portion (18) at both ends.

6. Fruit harvesting kit, according to the preceding claims, wherein it further includes a set of short worms (19), indicated for the harvesting of nuts, such as, for example, almonds, wherein the set of short worms (19) is intended to replace long worms equipped as standard in the chassis (4) of the vibrator/harvester apparatus initially configured for the harvesting of other fruits, such as, for example, olives, and a set of two long worms (25) with adaptation support (26), especially indicated for the harvesting of other fruits, such as, for example, olives, wherein the set of long worms (25) is intended to replace short worms equipped as standard in the chassis (4) of the vibrator/harvester apparatus initially configured for the harvesting of nuts, such as, for example, almonds.

7. A vibrator/harvester apparatus comprising
a hauling vehicle (14),
a chassis (4), the chassis comprising a tubular connection (2),
short or long worms equipped as standard worms in the chassis (4), and a fruit harvesting kit according to claims 1-5.

8. A vibrator/harvester apparatus comprising
a hauling vehicle (14),
a chassis (4), the chassis comprising a tubular connection (2),
a fruit harvesting kit, according to claim 6, wherein the set of short worms (19) of the fruit harvesting kit is replacing long worms equipped as standard in said chassis (4) or a set of long worms of the fruit harvesting kit is replacing short worms equipped as standard in the chassis (4).

9. A vibrator/harvester apparatus according to the preceding claim 8, **characterized in that** the set of short worms (19) are positioned by one end in a front part of the chassis (4) and by an opposite end in a structural portion (22) of the chassis (4) together with its actuation motor (20), this end remaining very close to an opening (23) manually folding, which connects with a peeler (24) installed as standard in each side of the chassis (4).

10. A vibrator/harvester apparatus according to the preceding claims 7 - 9 **characterized in that** the set of long worms (25) are positioned by one end in the front part of the chassis (4) and by the opposite end in an adaptation support (26) together with its actuation motor (20), this end being very close to the rear worm (21), a folding opening (23) of access to peelers (24) remaining closed.

## Patentansprüche

1. Ausrüstung zur Fruchternte, anpassbar an eine Rüttel-/Ernteeinrichtung mit einem Förderfahrzeug (14), einem einen rohrförmigen Anschluss (2) aufweisenden Chassis (4) und als Standardschnecken das Chassis (4) ausrüstenden kurzen oder langen Schnecken, **dadurch gekennzeichnet, dass** die Ausrüstung zur Fruchternte aufweist
eine Kupplungsbasis (11), die mit einer Welle mit zwei Rädern (12) und mit Schnellkupplungsmitteln (13) zum Koppeln mit einem Förderfahrzeug (14) der Rüttel-/Ernteeinrichtung ausgestattet ist,
einen vertikalen Hebeförderer (10), der fest mit der Kupplungsbasis (11) verbunden ist,
einen Behälter mit großem Fassungsvermögen (1; 1.1), der mit seinem unteren Teil mit dem vertikalen Hebeförderer (10) zum Anheben des Behälters (1 und 1.1) gekoppelt ist,
einen flexiblen Schlauch (3),
wobei der Behälter (1; 1.1) an seinem hinteren Seitenteil einen rohrförmigen Anschluss (2) für die Montage des flexiblen Schlauchs (3) zur Kopplung mit einem rohrförmigen Anschluss (2) des Chassis (4) der Rüttel-/Ernteeinrichtung aufnimmt, wobei der flexible Schlauch (3) zum Absaugen und Speichern der geernteten Früchte innerhalb des Behälters (1) mittels des Zusammenwirkens einer Saugturbine (5) mit einem hydraulischen Antriebsmotor (6) vorgesehen ist, die an dem oberen Teil des Behälters (1) aufgenommen sind.

2. Ausrüstung zur Fruchternte nach Anspruch 1, wobei der Behälter (1) Hub- und Schüttmittel und eine Klapptür (8) in seinem oberen Teil mittels der Betätigung eines Hydraulikzylinders (9) aufnimmt.

3. Ausrüstung zur Fruchternte nach Anspruch 1, wobei der Behälter (1.1) Hubmittel und eine Klapptür (8) in seinem unteren Teil mittels der Betätigung eines Hydraulikzylinders (9) aufnimmt.

4. Ausrüstung zur Fruchternte nach den vorhergehenden Ansprüchen, wobei der vertikale Hebeförderer (10) an seinem oberen Teil ein Führungsrad (12) zum Positionieren eines Schlauchblocks (7) aufnimmt, der zwischen einem allgemeinen Hydrauliksystem der Rüttel-/Ernteeinrichtung und dem hydraulischen Antriebsmotor (6) der Saugturbine (5) verbunden ist.

5. Ausrüstung zur Fruchternte nach den vorhergehenden Ansprüchen, wobei der flexible Schlauch (3) an beiden Enden einen Schnellverbindungsmetallabschnitt (18) aufweist.

6. Ausrüstung zur Fruchternte nach den vorhergehenden Ansprüchen, wobei sie ferner einen Satz kurzer Schnecken (19), der für die Ernte von Nüssen gekennzeichnet ist, wie beispielsweise Mandeln, wobei der Satz kurzer Schnecken (19) dazu bestimmt ist, lange Schnecken zu ersetzen, die als Standard das Chassis (4) der Rüttel-/Ernteeinrichtung ausstatten, die ursprünglich für die Ernte anderer Früchten, wie beispielsweise Oliven, ausgelegt ist, und einen Satz zweier langer Schnecken (25) mit Anpassungsträger (26) umfasst, die insbesondere für die Ernte anderer Früchte, wie beispielsweise Oliven, gekennzeichnet sind, wobei der Satz langer Schnecken (25) dazu bestimmt ist, kurze Schnecken zu ersetzen, die als Standard das Chassis (4) der Rüttel-/Ernteeinrichtung ausstatten, die ursprünglich für die Ernte von Nüssen, wie beispielsweise Mandeln, ausgelegt ist.

7. Rüttel-/Ernteeinrichtung, aufweisend
ein Förderfahrzeug (14),
ein Chassis (4), wobei das Chassis einen rohrförmigen Anschluss (2) aufweist,
kurze oder lange Schnecken, die als Standardschnecken das Chassis (4) ausstatten, und eine Ausrüstung zur Fruchternte nach den Ansprüchen 1-5.

8. Rüttel-/Ernteeinrichtung, aufweisend
ein Förderfahrzeug (14),
ein Chassis (4), wobei das Chassis einen rohrförmigen Anschluss (2) aufweist,
eine Ausrüstung zur Fruchternte nach Anspruch 6, wobei der Satz kurzer Schnecken (19) der Ausrüstung zur Fruchternte lange Schnecken ersetzt, die als Standard das Chassis (4) ausstatten, oder ein Satz langer Schnecken der Ausrüstung zur Fruchternte kurze Schnecken ersetzt, die als Standard das Chassis (4) ausstatten.

9. Rüttel-/Ernteeinrichtung nach dem vorhergehenden Anspruch 8, **dadurch gekennzeichnet, dass** der Satz kurzer Schnecken (19) mit einem Ende an einem vorderen Teil des Chassis (4) und mit einem gegenüberliegenden Ende an einem Strukturabschnitt (22) des Chassis (4) zusammen mit seinem Antriebsmotor (20) positioniert ist, wobei dieses Ende sehr nahe an einer manuell klappenden Öffnung (23) verbleibt, die mit einem Schäler (24) verbunden ist, der als Standard auf jeder Seite des Chassis (4) installiert ist.

10. Rüttel-/Ernteeinrichtung nach den vorhergehenden Ansprüchen 7-9, **dadurch gekennzeichnet, dass** der Satz langer Schnecken (25) mit einem Ende an dem vorderen Teil des Chassis (4) und mit dem gegenüberliegenden Ende an einem Anpassungsträger (26) zusammen mit seinem Antriebsmotor (20) positioniert ist, wobei sich dieses Ende sehr nahe an der hinteren Schnecke (21) befindet, wobei eine klappende Zugangsöffnung (23) zu Schälern (24) geschlossen bleibt.

## Revendications

1. Kit de récolte de fruits, adaptable sur un appareil vibreur/récolteur présentant un véhicule de traction (14), un châssis (4) comprenant une liaison tubulaire (2) et des vis sans fin courtes ou longues dotées en tant que vis sans fin standards dans le châssis (4), **caractérisé en ce que** le kit de récolte de fruits comprend
une base d'accouplement (11), dotée d'un arbre avec deux roues (12) et d'un moyen d'accouplement rapide (13) pour l'accouplement avec un véhicule de traction (14) de l'appareil vibreur/récolteur,
un élévateur vertical (10), attaché solidement à la base d'accouplement (11),
un conteneur grande capacité (1 ; 1.1), couplé par sa partie inférieure à l'élévateur vertical (10) pour le levage dudit conteneur conteneur (1 et 1.1),
un tuyau flexible (3),
dans lequel ledit conteneur (1; 1.1) incorpore, dans sa partie latérale arrière, une liaison tubulaire (2) pour l'assemblage du tuyau flexible (3), destinée à l'accouplement avec une liaison tubulaire (2) du châssis (4) de l'appareil vibreur/récolteur, ledit tuyau flexible (3) étant prévu pour l'aspiration et le stockage des fruits récoltés à l'intérieur dudit conteneur (1) à l'aide de la collaboration d'une turbine d'aspiration (5) avec un moteur d'actionnement hydraulique (6) incorporé dans la partie supérieure dudit conteneur (1).

2. Kit de récolte de fruits selon la revendication 1, dans lequel le conteneur (1) incorpore des moyens de levage et de basculement et une porte battante (8) dans sa partie supérieure, à l'aide de l'actionnement d'un vérin hydraulique (9).

3. Kit de récolte de fruits selon la revendication 1, dans lequel le conteneur (1.1) incorpore des moyens de levage et une porte battante (8) dans sa partie inférieure, à l'aide de l'actionnement d'un vérin hydraulique (9).

4. Kit de récolte de fruits selon les revendications précédentes, **dans lequel** l'élévateur vertical (10) incorpore une roue de guidage (12) dans sa partie supérieure pour le positionnement d'un bloc de flexibles (7) reliés entre un système hydraulique général de l'appareil vibreur/récolteur et le moteur d'actionnement hydraulique (6) de la turbine d'aspiration (5).

5. Kit de récolte de fruits selon les revendications précédentes, dans lequel le tuyau flexible (3) comprend une partie métallique de liaison rapide (18) aux deux extrémités.

6. Kit de récolte de fruits selon les revendications précédentes, dans lequel il comprend en outre un ensemble de vis sans fin courtes (19), indiquées pour la récolte de fruits à coque, tels que par exemple des amandes, l'ensemble de vis sans fin courtes (19) étant destiné à remplacer des vis sans fin longues dotées en standard dans le châssis (4) de l'appareil vibreur/récolteur initialement configuré pour la récolte d'autres fruits, tels que par exemple des olives, et un ensemble de deux vis sans fin longues (25) avec un support d'adaptation (26), particulièrement indiquées pour la récole d'autres fruits, tels que par exemple des olives, l'ensemble de vis sans fin longues (25) étant destiné à remplacer des vis sans fin courtes dotées en standard dans le châssis (4) de l'appareil vibreur/récolteur initialement configuré pour la récolte de fruits à coque, tels que par exemple des amandes.

7. Appareil vibreur/récolteur comprenant
un véhicule de traction (14),
un châssis (4), le châssis comprenant une liaison tubulaire (2),
des vis sans fin courtes ou longues dotées en tant que vis sans fin standards dans le châssis (4), et un kit de récolte de fruits selon les revendications 1 à 5.

8. Appareil vibreur/récolteur comprenant
un véhicule de traction (14),
un châssis (4), le châssis comprenant une liaison tubulaire (2),
un kit de récolte de fruits selon la revendication 6, dans lequel l'ensemble de vis sans fin courtes (19) du kit de récolte de fruits remplace les vis sans fin longues dotées en standard dans ledit châssis (4) ou un ensemble de vis sans fin longues du kit de récolte de fruits remplace les vis sans fin courtes dotées en standard dans le châssis (4).

9. Appareil vibreur/récolteur selon la revendication précédente 8,
**caractérisé en ce que** l'ensemble de vis sans fin courtes (19) est positionné à une extrémité dans une partie avant du châssis (4) et à une extrémité opposée dans une portion structurelle (22) du châssis (4) conjointement avec son moteur d'actionnement (20), cette extrémité restant très proche d'une ouverture (23) rabattable manuellement, laquelle est reliée à un éplucheur (24) installé en standard de chaque côté du châssis (4).

10. Appareil vibreur/récolteur selon les revendications précédentes 7 à 9,
**caractérisé en ce que** l'ensemble de vis sans fin longues (25) est positionné à une extrémité dans la partie avant du châssis (4) et à l'extrémité opposée dans un support d'adaptation (26) conjointement avec son moteur d'actionnement (20), cette extrémité restant très proche de la vis sans fin arrière (21), une ouverture rabattable (23) destinée à l'accès aux éplucheurs (24) restant fermée.
